# EUROPÄISCHE PATENTSCHRIFT

(11) **EP 3 306 263 B1**
(45) Veröffentlichungstag und Bekanntmachung des Hinweises auf die Patenterteilung: **20.11.2019**
(21) Anmeldenummer: 17191964.0
(22) Anmeldetag: 19.09.2017
(51) Int. Cl.: G01B 11/02

(54) **CHROMATISCH-KONFOKALER ABSTANDSSENSOR**
CHROMATICALLY CONFOCAL DISTANCE SENSOR
CAPTEUR CONFOCAL À CODAGE CHROMATIQUE DE DISTANCE

(30) Priorität: 04.10.2016 US 201615284983
(43) Veröffentlichungstag der Anmeldung: 11.04.2018
(73) Patentinhaber: Precitec Optronik GmbH, 63263 Neu-Isenburg (DE)
(72) Erfinder: Marsaut, David, 13850 Gréasque (FR); Schönleber, Martin, 63743 Aschaffenburg (DE)
(74) Vertreter: Ostertag & Partner Patentanwälte mbB

(56) Entgegenhaltungen:
- EP-A1- 1 398 597
- JP-A- H 047 502
- US-A1- 2002 044 287
- US-A1- 2010 296 106

## Beschreibung

### 1. Gebiet der Erfindung

Die Erfindung betrifft einen chromatisch-konfokalen Abstandssensor, bei dem die Lichtquelle, die Abbildungsoptik und das Spektrometer im gleichen Gehäuse angeordnet sind. Bei entsprechender Miniaturisierung der einzelnen Baugruppen kann ein solcher Abstandssensor so kleiner Abmessungen haben und so leicht sein, dass er an einer Halterung eines Koordinatenmessgeräts (CMM, *coordinate measuring machine*) befestigt werden kann.

### 2. Beschreibung des Standes der Technik

Chromatisch-konfokale Abstandssensoren werden in der industriellen Messtechnik seit vielen Jahren eingesetzt, wenn Abstände zu Objektoberflächen berührungslos und mit hoher Genauigkeit gemessen werden sollen. Bei transparenten Objekten lassen sich auch Wandstärken oder andere Dicken messen, da in der Regel für jede optische Grenzfläche ein Abstand ermittelt werden kann und sich die Dicke als Differenz der gemessenen Abstände ergibt.

Chromatisch-konfokale Abstandssensoren enthalten eine Lichtquelle, die polychromatisches Messlicht erzeugt und auf eine Lochblende richtet. Unter einer Lochblende wird in diesem Zusammenhang jede kleine Öffnung bezeichnet, aus der Licht austreten und gegebenenfalls auch wieder eintreten kann. Die Lochblende wird von einer Abbildungsoptik auf die zu vermessende Oberfläche abgebildet. Zumindest ein Teil der Abbildungsoptik weist eine signifikante chromatische Längsaberration auf. Verschiedenfarbige Bilder der Lochblende sind deswegen auf der optischen Achse der Abbildungsoptik hintereinander angeordnet. Nur der spektrale Anteil des Messlichts, bei dem das Bild der Lochblende genau auf der zu vermessenden Oberfläche liegt, wird von dieser so zurückreflektiert, dass es in die gleiche Lochblende oder eine hierzu optisch konjungiert angeordnete Lochblende eintreten kann. Die Wellenlänge dieses spektralen Anteils wird mit Hilfe eines Spektrometers erfasst. Jeder Wellenlänge ist dabei ein bestimmter Abstand von der Abbildungsoptik zugeordnet. Die anderen spektralen Anteile werden zwar von der Objektoberfläche ebenfalls teilweise reflektiert, können aber von der Abbildungsoptik nicht in die gleiche oder eine dazu optisch konjugierte Lochblende fokussiert werden und tragen deswegen nicht signifikant zu dem Teil des Messlichts bei, der vom Spektrometer spektral analysiert wird.

Aus der EP 2 667 152 B1 ist ein chromatisch-konfokaler Abstandssensor bekannt, der über eine automatische Wechselkupplung an einer Halterung eines Koordinatenmessgeräts (CMM) befestigt werden kann. Mit Koordinatenmessgeräten lassen sich die räumlichen Koordinaten eines Objekts mit hoher Genauigkeit bestimmen. Üblicherweise umfassen Koordinatenmessgeräte einen taktilen Messkopf, der mit Hilfe eines Verfahrsystems dem zu vermessenden Objekt zugestellt wird. Die Verfahrwege werden dabei mit hoher Genauigkeit mit Hilfe von Weg- und Winkelsensoren erfasst. Gegenüber taktilen Sensoren haben optische Abstandssensoren u.a. den Vorteil, dass die Messung berührungslos erfolgt und dadurch auch sehr empfindliche oder verschmutzte Oberflächen problemlos vermessen werden können.

Um austauschbar an einem Koordinatenmessgerät befestigt werden zu können, muss ein chromatisch-konfokaler Abstandssensor einige Voraussetzungen erfüllen, die bei herkömmlichen Sensoren dieser Bauart nicht vorliegen. So muss ein solcher Abstandssensor sehr klein und leicht sein, damit er von den für die Befestigung von taktilen Sensoren ausgelegten Halterungen der Koordinatenmessmaschine getragen werden kann. Das gesamte Volumen des Abstandssensors sollte idealerweise kleiner als etwa 350 cm³ und das Gewicht kleiner als etwa 500 g sein (herkömmliche taktile Sensoren haben im Vergleich dazu oft nur ein Volumen von weniger als 20 cm³ und ein Gewicht von weniger als 100 g). Der kleine Bauraum bringt auch Probleme im Hinblick auf das Wärmemanagement mit sich. Da ein größerer Teil der von der Lichtquelle und dem Spektrometer aufgenommenen elektrischen Leistung innerhalb des Gehäuses in Wärme umgewandelt wird, kann es durch thermisch induzierte Deformationen zu einer Beeinträchtigung der Messgenauigkeit kommen.

Außerdem sollten das Spektrometer, die Abbildungsoptik und die Lichtquelle im gleichen Gehäuse angeordnet sein, damit das Messlicht nicht über eine zusätzliche optische Faser zu außerhalb des Gehäuses angeordnete Baugruppen geführt werden muss. Eine solche Faser müsste nämlich über die automatische Wechselkupplung des Koordinatenmessgeräts geführt werden, wofür diese standardmäßig nicht eingerichtet ist.

Der Abstandssensor, der aus der vorstehend erwähnten EP 2 667 152 B1 bekannt ist, erfüllt diese Voraussetzungen nur bedingt. Da das Messlicht in optischen Fasern geführt wird, die sich (vor allem im Bereich von Faserkopplern) nicht beliebig stark krümmen lassen, ist der Abstandssensor so groß und schwer, dass er sich nicht an alle Koordinatenmessmaschinen ankoppeln lässt.

Aus FR 2930334 A1 und FR 2950441 B sind chromatisch-konfokale Abstandssensoren bekannt, bei denen das Messlicht einen Strahlteiler als Freistrahl durchtritt. Unter einem Freistrahl wird ein Lichtstrahl verstanden, der nicht in einer optischen Faser oder einem anderen optischen Wellenleiter geführt ist. Die Lichtquelle und das Spektrometer sind bei diesen bekannten Abstandssensoren über optische Fasern mit einem Messkopf verbunden, der den Freistrahl-Strahlteiler und die Abbildungsoptik enthält. Dadurch können diese Abstandssensoren nicht automatisch an Koordinatenmessgeräte angekoppelt werden.

Aus der EP 1 398 597 A1 ist ein Abstandssensor bekannt, mit dem sich unter Verwendung des chromatisch-konfokalen Messprinzips Abstände zu Werkstücken messen lassen. Eine Lichtquelle emittiert polychromatisches Licht, das als Freistrahl eine erste Lochblende durchtritt und an einer planen Strahlteilerfläche transmittiert wird. Danach trifft das Messlicht als divergentes Strahlenbündel auf eine Abbildungsoptik, die eine chromatische Längsaberration hat. Das vom Messobjekt reflektierte Licht durchtritt erneut die Abbildungsoptik und trifft als konvergentes Strahlenbündel auf die Strahlteilerfläche. Dort wird das Licht reflektiert und passiert die spiegelsymmetrisch zur Strahlteilerfläche und zur ersten Lochblende ausgerichtete zweite Lochblende. Anschließend trifft das Licht auf einen spektral auflösenden Detektor.

### ZUSAMMENFASSUNG DER ERFINDUNG

Aufgabe der Erfindung ist es, einen chromatisch-konfokalen Abstandssensor bereitzustellen, der eine hohe Messgenauigkeit hat, aber so klein und leicht ist, dass er bei Bedarf an der Halterung einer Koordinatenmessmaschine befestigt werden kann.

Diese Aufgabe wird erfindungsgemäß durch einen chromatisch-konfokalen Abstandssensor gelöst, der ein Gehäuse aufweist. In dem Gehäuse ist eine Lichtquelle angeordnet, die dazu eingerichtet ist, polychromatisches Messlicht zu erzeugen. In dem Gehäuse sind außerdem eine Abbildungsoptik, die eine chromatische Längsaberration hat, ein Spektrometer und eine plane Strahlteilerfläche angeordnet, die Teil eines Strahlteilers ist und im Lichtweg des Messlichts zwischen der Lichtquelle und der Abbildungsoptik und außerdem im Lichtweg des Messlichts, das nach Durchtritt durch die Abbildungsoptik von einem Messobjekt reflektiert wurde, zwischen der Abbildungsoptik und dem Spektrometer angeordnet ist. Im Gehäuse des Abstandssensors befinden sich außerdem eine erste Lochblende, die im Lichtweg zwischen der Lichtquelle und der Strahlteilerfläche angeordnet ist, und eine zweite Lochblende, die im Lichtweg zwischen der Strahlteilerfläche und dem Spektrometer angeordnet ist. Die erste Lochblende und die zweite Lochblende sind dabei spiegelsymmetrisch bezüglich der Strahlteilerfläche angeordnet. Erfindungsgemäß breitet sich das Messlicht innerhalb des Gehäuses als Freistrahl aus. Die Strahlteilerfläche, die erste Lochblende und die zweite Lochblende sind außerdem gemeinsam auf einem Träger befestigt, der einen isotropen thermischen Ausdehnungskoeffizienten hat.

Während bei den Abstandssensoren, die aus der eingangs erwähnten EP 2 667 152 B1 bekannt sind, das Messlicht zumindest teilweise in optischen Fasern geführt ist, breitet sich bei dem erfindungsgemäßen Abstandssensor das Messlicht innerhalb des Gehäuses vollständig als Freistrahl aus. Dadurch kann das Messlicht auf kleinstem Raum mit Hilfe reflektierender Flächen mehrfach in alle Raumrichtungen gefaltet werden, so dass sich sehr kleine Gehäuseabmessungen (beispielsweise 65 x 45 x 110 mm) und ein entsprechend geringes Gewicht von unter 400 g realisieren lassen.

Da die Wärmeabfuhr bei derart dicht gepackten optischen Elementen problematisch ist, sind die erste Lochblende und die zweite Lochblende gemeinsam auf einem Träger befestigt, der einen isotropen thermischen Ausdehnungskoeffizienten hat. Kommt es aufgrund einer Temperaturveränderung zu einer Deformation des Trägers, so führt die spiegelsymmetrische Anordnung der Lochblenden auf dem gemeinsamen Träger wegen dessen isotropen thermischen Ausdehnungskoeffizienten dazu, dass sich die optischen Wege zwischen der Strahlteilerfläche und den Lochblenden stets gleichmäßig verändern. Die optische Konjugation zwischen den Lochblenden bleibt dadurch unabhängig von der Temperatur fast vollständig erhalten. Folglich kann es bei Temperaturveränderungen, die in Folge der kompakten Bauweise nicht völlig vermeidbar sind, nicht mehr zu einer wesentlichen Beeinträchtigung der Messgenauigkeit kommen.

Die Strahlteilerfläche ist die Fläche eines Strahlteilers, an der ein auftreffender Lichtstrahl in zwei Teilstrahlen getrennt wird. Üblicherweise erfolgt die Aufteilung intensitätsmäßig; im Prinzip kommt jedoch auch eine Aufteilung nach Polarisationszuständen in Betracht. Bei Strahlteilerwürfeln, die aus zwei Prismen bestehen, die miteinander mit Hilfe eines Harzes verkittet sind, handelt es sich bei der Strahlteilerfläche um eine der aneinander angrenzenden Hypothenusenflächen der Prismen, die eine metallische oder dielektrische Beschichtung trägt. Diese Beschichtung legt das Intensitätsverhältnis zwischen dem transmittierten und dem reflektierten Strahl fest. Bei Strahlteilerplatten ist die Strahlteilerfläche die Außenfläche der Platte, an der das Licht auftrifft und teilweise reflektiert wird. Strahlteilerwürfel sind im Vergleich zu Strahlteilerplatten bevorzugt, weil bei Strahlteilerplatten Mehrfachreflexe, zusätzlicher Astigmatismus und Koma bei Beaufschlagung mit einem divergenten Strahl auftreten können. Als Strahlteiler in Betracht kommen ferner Folienteiler, die aus einer wenige Mikrometer dicken Membran bestehen, welche die Strahlteilerfläche bildet. Die Membran kann z. B. aus Nitrozellulose bestehen und ist üblicherweise in einem Trägerrahmen plan eingespannt. Die Prismen, Glasplatten oder Trägerrahmen derartiger Strahlteiler sind dann ebenfalls als Teil des Trägers anzusehen, auf dem die Lochblenden angeordnet sind, und müssen deswegen ebenfalls einen zumindest annähernd isotropen thermischen Ausdehnungskoeffizienten haben.

Erfindungsgemäß weist der Träger ein z. B. plattenförmiges Tragelement auf, auf dem ein die Strahlteilerfläche umfassender Strahlteiler, die erste Lochblende und die zweite Lochblende befestigt sind. Dieses Tragelement kann auch mehrteilig aufgebaut sein.

Würde es sich bei den Lochblenden jeweils um eine lichtundurchlässige Scheibe handeln, die eine Blendenöffnung hat, so hätte eine solche Blendenöffnung eine nicht vernachlässigbare axiale Ausdehnung. Erfindungsgemäß weist die erste und die zweite Lochblende deswegen eine transparente Platte auf, die eine lichtabsorbierende Beschichtung trägt, die eine Blendenöffnung hat. Die Blendenöffnung ist sehr klein und hat typischerweise einen Durchmesser zwischen 10 µm und 50 µm. Die Beschichtung kann beispielsweise aus Chrom bestehen und sehr dünn sein.

Bei einem Ausführungsbeispiel sind die Platten an Stützelementen befestigt, die ihrerseits an dem Tragelement befestigt sind. Auch die Stützelemente sollten aus dem gleichen Material gefertigt sein.

Im Hinblick auf eine möglichst geringe Temperaturabhängigkeit ist es günstig, wenn das Tragelement, die Stützelemente und die daran befestigten Platten alle aus dem gleichen Material oder aus unterschiedlichen Materialien bestehen, die aber gleiche thermische Ausdehnungskoeffizienten haben.

Günstig ist es, wenn das Messlicht als divergentes Strahlenbündel auf die Strahlteilerfläche auftrifft, weil auf diese Weise weniger Störlicht in das Spektrometer gelangt und dadurch die Messgenauigkeit zumindest bei solchen Messobjekten verbessert wird, die wegen eines niedrigen Reflexionskoeffizienten oder einer schrägen Objektoberfläche nur wenig Messlicht reflektieren.

Vorzugsweise umfasst die Abbildungsoptik ein Objektiv, das austauschbar an einem Teil des Gehäuses befestigt ist, wobei das aus der Richtung der Lichtquelle kommende Messlicht als kollimiertes Strahlenbündel in das Objektiv eintritt. Ein austauschbares Objektiv ermöglicht es, Objektive mit anderen Brennweiten zu verwenden und dadurch den Messabstand an die konkrete Messaufgabe anzupassen. Da das vom Strahlteiler kommende Messlicht als kollimiertes Strahlenbündel in das Objektiv eintritt, sind die Anforderungen an die Präzision bei der Ankopplung des Objektivs an das übrige Gehäuse herabgesetzt.

Bei einem Ausführungsbeispiel enthält das Spektrometer eine Detektorzeile, ein reflexives Beugungsgitter und eine Spektrometeroptik, welche die zweite Lochblende auf die Detektorzeile abbildet. Die Spektrometeroptik ist so im Lichtweg des Messlichts angeordnet, dass sie vor und nach Reflexion an dem Beugungsgitter vom Messlicht durchtreten wird. Infolge dieses doppelten Durchtritts der Spektrometeroptik lässt sich der benötigte Bauraum weiter verringern. Trotzdem kann eine hochwertige und aus mehreren Linsen bestehende Spektrometeroptik verwendet werden, welche die zweite Lochblende scharf auf die Detektorzeile abbildet und damit für hohe Signalstärken sorgt.

Vorzugsweise weist das Gehäuse eine automatische Wechselkupplung auf, mit der das Gehäuse automatisch an einer Halterung eines Koordinatenmessgeräts befestigbar ist. Die Vorzüge des sehr kleinen und leichten Abstandssensors lassen sich dann für die Verwendung in einem Koordinatenmessgerät nutzen. Der kleine und leichte Abstandssensor lässt sich jedoch auch unabhängig von Koordinatenmessgeräten vorteilhaft für alle Messaufgaben nutzen, bei denen es auf eine geringe Größe und ein kleines Gewicht des Abstandssensors ankommt.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: den Strahlengang in einem erfindungsgemäßen Abstandssensor in einem vereinfachten Meridionalschnitt;
- Figur 2: eine perspektivische Darstellung eines in dem Gehäuse des Abstandssensors angeordneten miniaturisierten Strahlteilermoduls mit zwei Lochblenden;
- Figur 3: eine perspektivische vereinfachte Darstellung des Abstandssensors mit entfernter Gehäuserückwand;
- Figur 4: eine perspektivische vereinfachte Darstellung der Gehäuserückwand;
- Figur 5: einen Ausschnitt des Strahlengangs in einem erfindungsgemäßen Abstandssensor, bei dem als Strahlteiler eine Strahlteilerplatte verwendet wird;
- Figur 6: eine perspektivische Darstellung eines nicht erfindungsgemäßen Strahlteilerwürfels, dessen Außenflächen Lochblenden tragen.

### BESCHREIBUNG BEVORZUGTER AUSFÜHRUNGSBEISPIELE

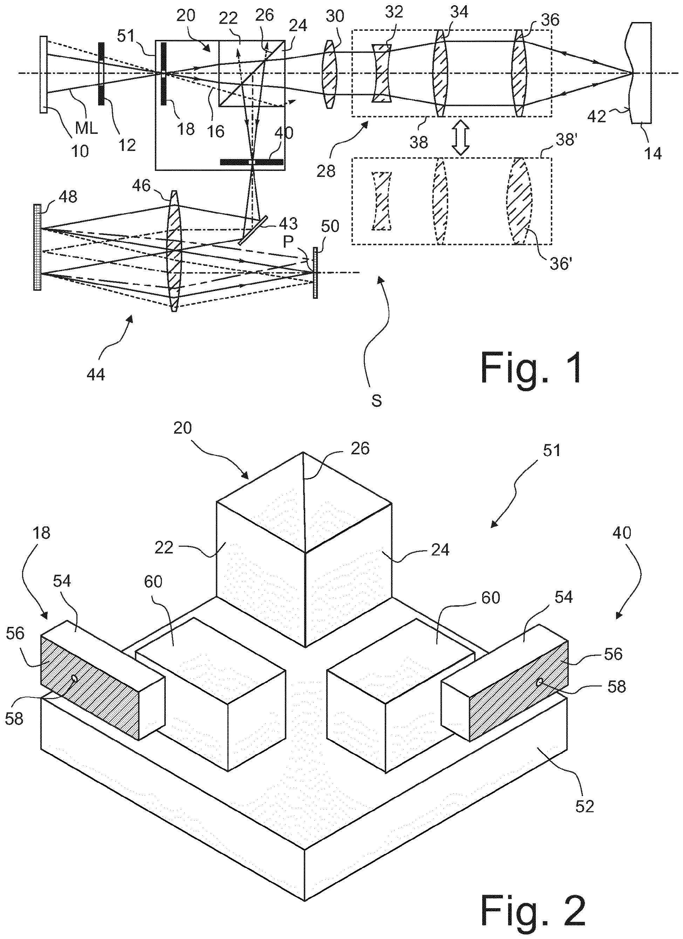

Die Figur 1 zeigt in einem vereinfachten meridionalen Schnitt den Strahlengang eines erfindungsgemäßen und insgesamt mit S bezeichneten Abstandssensors gemäß einem ersten Ausführungsbeispiel. Links oben in der Figur 1 ist mit der Ziffer 10 eine Lichtquelle bezeichnet, die dazu eingerichtet ist, polychromatisches Messlicht ML zu erzeugen. Als polychromatisch wird Licht bezeichnet, das nicht monochromatisch ist und somit nicht nur aus Licht einer einzigen Wellenlänge besteht. Das Spektrum des polychromatischen Messlichts ML kann kontinuierlich oder diskret sein.

Im dargestellten Ausführungsbeispiel wird als Lichtquelle 10 eine Weißlicht-LED verwendet, die ein kontinuierliches Spektrum zwischen etwa 400 nm und 720 nm erzeugt. Die Weißlicht-LED strahlt das Messlicht ML gleichmäßig über seine gesamte plane Lichtaustrittsfläche ab.

Die Weißlicht-LED kann auf einer speziellen Wärmebrücke montiert sein, welche die Verlustwärme von der Rückseite der LED an eine anliegende Gehäusewand abführt.

Im Lichtweg hinter der Lichtquelle 10 ist eine Aperturblende 12 angeordnet, mit welcher der Winkel des Messlichtkegels begrenzt wird. Die Aperturblende 12 verhindert, dass Messlicht in den nachfolgenden Strahlengang gelangt, das nicht auf das zu vermessende Messobjekt 14 fokussiert werden kann, sondern ohne Aperturblende 12 infolge von Streuung oder unerwünschten Mehrfachreflexionen zu Störlicht führen würde, das die Messgenauigkeit beeinträchtigt. In der Figur 1 ist beispielhaft ein Störlichtstrahl 16 eingezeichnet, dessen Ausbreitung durch die Aperturblende 12 verhindert wird.

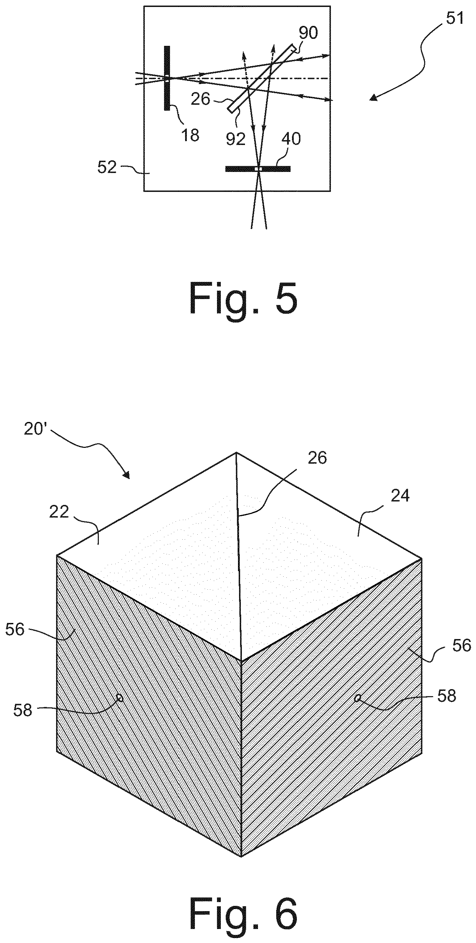

Danach durchtritt das Messlicht ML eine erste Lochblende 18, deren Aufbau weiter unten mit Bezug auf die Figur 2 näher erläutert wird. Das die Lochblende 18 durchtretende Messlicht ML fällt divergent auf einen Strahlteilerwürfel 20, der in an sich bekannter Weise aus zwei Prismen 22, 24 besteht, die entlang ihrer Hypothenusenflächen mit Hilfe einer Harzschicht miteinander verkittet sind. Der Strahlteilerwürfel 20 verursacht im Vergleich zu der in der Figur 5 gezeigten Strahlteilerplatte keine Probleme wie Mehrfachreflexe, zusätzlicher Astigmatismus und Koma bei divergentem Strahl. Im dargestellten Ausführungsbeispiel ist der Strahlteilerwürfel 20 so ausgelegt, dass der größte Teil des Messlichts ML ohne Reflexion die Strahlteilerfläche 26 durchtritt und auf eine Abbildungsoptik 28 trifft, die im dargestellten Ausführungsbeispiel aus vier Linsen besteht. Eine erste Linse 30 hat positive Brechkraft und kollimiert das auftreffende divergente Messlicht ML. Eine zweite Linse 32 hat eine negative Brechkraft und weitet das Messlicht ML auf. Eine dritte Linse 34 hat wieder positive Brechkraft und kollimiert das auftreffende Messlicht ML. Eine vierte Linse 36 fokussiert das auftreffende kollimierte Messlicht ML in ihrer Brennebene.

Während die Linsen 30 und 32 eine vernachlässigbar kleine chromatische Längsaberration haben und vorzugsweise asphärisch sind, wurde für die dritte Linse 34 und die vierte Linse 36 ein Material mit großer Dispersion gewählt, so dass diese beiden Linsen 34, 36 eine große chromatische Längsaberration haben. Alternativ hierzu können auch die Linsen 34 und 36 auch als diffraktive Linsen ausgebildet sein, wie dies etwa aus der EP 2 500 685 A1 bekannt ist. Infolge der chromatischen Längsaberration werden die unterschiedlichen spektralen Anteile des Messlichts ML in unterschiedlichen Abständen von der vierten Linse 36 fokussiert. Die Abbildungsoptik 28 ist dabei so optimiert, dass für alle Wellenlängen innerhalb eines größeren Wellenlängenbereichs jeweils ein scharfer und kleiner Brennpunkt entsteht, wobei die Brennpunkte entlang der optischen Achse hintereinander angeordnet sind. Bei normalen chromatisch unkorrigierten Optiken erhält man hingegen in der Regel lediglich für einen kleinen Wellenlängenbereich scharfe und kleine Brennpunkte, während das Licht anderer Wellenlängen nur in größere unscharfe Flecken gebündelt wird.

Die zweite, dritte und vierte Linse 32, 34 bzw. 36 sind in einem Objektiv 38 zusammengefasst, das auswechselbar über ein Schraubgewinde an einem Gehäuseteil des Abstandssensors S befestigt ist. Unterhalb des Objektivs 38 ist in der Figur 1 ein Austauschobjektiv 38' mit gestrichelten Linien angedeutet, das gegen das Objektiv 38 ausgetauscht werden kann. Hier ist unterstellt, dass die vierte Linse 36' des Austauschobjektivs 38' eine höhere Brechkraft hat als die vierte Linse 36 des Objektivs 38. Dadurch hat das Austauschobjektiv 38' eine kürzere Brennweite als das Objektiv 38. Durch Austausch des Objektivs 38 kann somit der Arbeitsabstand, in dem das Messobjekt 14 relativ zum Objektiv 38 anzuordnen ist (oder umgekehrt), an die jeweilige Messaufgabe angepasst werden. Da das Messlicht ML kollimiert in das Objektiv 38 eintritt, wirkt sich ein leichter Querversatz nicht nennenswert auf die optische Abbildung aus. Dies verringert die Anforderungen an die Genauigkeit des Anschlussflansches, mit dem das Objektiv 38 am übrigen Gehäuse befestigt ist.

Von einer Oberfläche 42 des Messobjekts 14 reflektiertes Messlicht ML wird von der Abbildungsoptik 28 aufgenommen und zurück auf den Strahlteilerwürfel 20 gerichtet. Das reflektierte Messlicht ML wird an der Strahlteilerfläche 26 teilweise reflektiert. Der reflektierte Anteil durchtritt eine zweite Lochblende 40, die sich in optisch konjugierter Position zur Oberfläche 42 des Messobjekts 14 befindet. Die Abbildungsoptik 28 bildet somit die erste Lochblende 18 über ein Zwischenbild auf der Oberfläche 42 des Messobjekts 14 auf die zweite Lochblende 40 ab. Damit sind die beiden Lochblenden 18, 40 optisch konjugiert.

Das die Lochblende 40 durchtretende Messlicht ML gelangt über einen Faltungsspiegel 43 in ein Spektrometer 44, das eine hier nur mit einer Linse angedeutete Spektrometeroptik 46, ein reflexives Beugungsgitter 48 und eine Detektorzeile 50 aus lichtempfindlichen Detektorpixeln umfasst.

Die zweite Lochblende 40 und die Detektorzeile 50 befinden sich in der Brennebene der Spektrometeroptik 46, so dass das Messlicht ML nach dem erstmaligen Durchtritt durch die Spektrometeroptik 46 kollimiert auf das reflexive Beugungsgitter 48 fällt. Nach erneutem Durchtritt durch die Spektrometeroptik 46 wird das vom reflexiven Beugungsgitter 48 gebeugte Messlicht ML von der Spektrometeroptik 46 auf die Detektorzeile 50 fokussiert. Somit bildet die Spektrometeroptik 46 die zweite Lochblende 40 auf die Detektorzeile 50 ab.

Wie oben bereits erwähnt wurde, tritt das Messlicht ML als divergentes Strahlenbündel in den Strahlteilerwürfel 20 ein. Dies ist deswegen vorteilhaft, weil dadurch die Menge des Störlichts verringert wird, das in das Spektrometer 44 gelangt. Im Strahlteilerwürfel 20 wird nämlich stets ein geringer Teil (typischerweise rund 1%) des auftreffenden Messlichts ML an der rückseitigen, d.h. zum Messobjekt 14 weisenden, Planfläche reflektiert. Dieses im Strahlteilerwürfel 20 reflektierte Messlicht wird von der Strahlteilerfläche 26 in Richtung des Spektrometers 44 als Störlicht reflektiert. Bei einem achsparallelen Strahlengang könnte dieses Störlicht über eine dann notwendige Sammellinse vollständig durch die zweite Lochblende 40 in das Spektrometer eintreten und dessen Messung stören. Weil hier jedoch das Messlicht als divergentes Strahlenbündel in den Strahlteilerwürfel 20 eintritt, wird von der Strahlteilerfläche 26 nur ein sehr kleiner Teil dieses Störlichts auf die Öffnung der zweiten Lochblende 40 gerichtet; das übrige Störlicht wird von der zweiten Lochblende 40 blockiert.

Da das Messlicht ML divergent auf die rückseitige Planfläche des Strahlteilerwürfels 20 auftrifft, ist das in Richtung des Spektrometers 44 reflektierte Störlichtbündel stark aufgeweitet, wenn es auf die zweite Lochblende 40 trifft. Daher kann nur ein sehr kleiner Teil dieses Störlichts in das Spektrometer gelangen und zu einem störenden Rauschuntergrund beitragen.

Die Abstandsmessung erfolgt dabei nach dem an sich bekannten konfokal-chromatischen Messprinzip. Nur Messlicht ML einer ganz bestimmten Wellenlänge wird von der Abbildungsoptik 28 in eine Ebene fokussiert, in der sich die Oberfläche 42 des Messobjekts 14 befindet. Ein Teil dieses Messlichts wird von der Oberfläche 42 reflektiert und von der Abbildungsoptik 28 auf die zweite Lochblende 40 so fokussiert, dass diese durchtreten werden kann. Licht anderer Wellenlängen wird zwar ebenfalls an der Oberfläche 42 des Messobjekts 14 reflektiert, kann aber nur zu einem sehr kleinen Teil die zweite Lochblende 40 durchtreten, da es von der Abbildungsoptik 28 nicht in die zweite Lochblende 40 fokussiert wird.

In das Spektrometer 44 kann somit im Wesentlichen nur Messlicht ML eintreten, das eine ganz bestimmte Wellenlänge hat; die anderen Wellenlängen fallen intensitätsmäßig deutlich ab. Da der Beugungswinkel am reflexiven Beugungsgitter 48 von der Wellenlänge abhängt, wird das Messlicht dieser Wellenlänge in eine bestimmte Richtung abgelenkt und von der Spektrometeroptik 46 in einem Punkt P fokussiert, der auf der Detektorzeile 50 liegt. Die intensitätsmäßig deutlich schwächeren übrigen Anteile des Messlichts ML werden in andere Richtungen gebeugt und von der Spektrometeroptik 46 an anderen Orten auf der Detektorzeile 50 fokussiert, wie dies in der Figur 1 mit gestrichelten und strichpunktierten Linien angedeutet ist. Durch Auswertung der an den Pixeln der Detektorzeile 50 erfassten Intensitäten lässt sich somit die Wellenlänge des Messlichts ML ermitteln, die von den Linsen 34, 36 genau auf die Oberfläche 42 des Messobjekts 14 fokussiert wurde. Da der Zusammenhang zwischen der Wellenlänge und der Brennweite der chromatisch unkorrigierten Linsen 34, 36 bekannt ist, lässt sich aus den erfassten Wellenlängen direkt der Abstand zur Oberfläche 42 des Messobjekts ableiten.

Bei dem in der Figur 1 gezeigten Abstandssensor S sind dessen einzelne optische Elemente ohne Fassungen und Halterungen dargestellt. Wie weiter unten näher erläutert ist, sind die optischen Elemente räumlich sehr dicht angeordnet, so dass Wärme, die insbesondere von der Lichtquelle 10 und der Detektorzeile 50 erzeugt wird, leicht auf die Fassungen und Halterungen der optischen Elemente übergehen kann.

Besonders kritisch ist in diesem Zusammenhang die Anordnung der beiden Lochblenden 18, 40. Da die Öffnungen in den Lochblenden 18, 40 für eine hohe laterale Messauflösung sehr klein sein müssen (der Durchmesser liegt bevorzugt zwischen 10 µm und 50 µm), führen selbst kleinste temperaturinduzierte relative Verschiebungen zwischen den Lochblenden 18, 40 dazu, dass die Abbildungsoptik 28 die erste Lochblende 18 nicht mehr exakt auf die zweite Lochblende 40 abbilden kann.

Um Beeinträchtigungen der Messgenauigkeit durch unvermeidbare Temperaturschwankungen zu verhindern, ist der Strahlteilerwürfel 20 zusammen mit den Lochblenden 18, 40 auf einem gemeinsamen plattenförmigen Tragelement 52 befestigt, wie dies in der perspektivischen Darstellung der Figur 2 gezeigt ist. Das Tragelement 52 hat einen isotropen thermischen Ausdehnungskoeffizienten und bildet mit den davon getragenen Bauteilen ein Lochblendenmodul 51, das zu Justagezwecken vorzugsweise mehrteilig aufgebaut ist und an einer Gehäusewandung des Abstandssensors S befestigt oder in diese integriert sein kann.

Die erste Lochblende 18 umfasst eine transparente quaderförmige Platte 54, die eine lichtabsorbierende Beschichtung 56 trägt. Die Beschichtung 56 hat eine Blendenöffnung 58, durch die hindurch das Messlicht die Lochblende 18 durchtreten kann. Die Platte 54 ist an einem ebenfalls quaderförmigen Stützelement 60 befestigt, das an einer Oberfläche des Tragelements 52 befestigt ist. Da die lichtabsorbierende Beschichtung 56 sehr dünn ist, hat die Blendenöffnung 58 eine vernachlässigbare axiale Ausdehnung, so dass die Blendenwirkung nicht vom Einfallswinkel des auftreffenden Lichts abhängt. Die Platten 54 sind an den Stützelementen 60 mit Hilfe eines bei UV-Licht aushärtenden Klebers festgeklebt und wurden vor dem Verkleben sorgfältig zueinander justiert. Die durch die Blendenöffnungen 58 der Lochblenden 18, 40 definierten optischen Achsen müssen sich im Strahlteilerwürfel 20 an einem Punkt auf der Strahlteilerfläche 26 kreuzen, damit die Abbildungsoptik 28 die Blendenöffnungen 58 der Lochblenden 18, 40 präzise aufeinander abbilden kann.

Die zweite Lochblende 40 ist identisch aufgebaut. Die Blendenebene der zweiten Lochblende, in der sich die absorbierende Beschichtung 56 erstreckt und die senkrecht zur optischen Achse ausgerichtet ist, ist zur Blendenebene der ersten Lochblende 18 rechtwinklig ausgerichtet. Der Strahlteilerwürfel 20 ist an einer Ecke des Tragelements 52 befestigt.

In den Figuren 1 und 2 ist erkennbar, dass die Lochblenden 18, 40 spiegelsymmetrisch bezüglich der Strahlteilerfläche 26 angeordnet sind.

Alle Bauteile des Lochblendenmoduls 51 mit Ausnahme der lichtabsorbierenden Beschichtungen 56 bestehen im dargestellten Ausführungsbeispiel aus Quarzglas. In Betracht kommt aber auch Zerodur®, das bei der für Hochpräzisionsmessungen üblichen Betriebstemperatur von 20° C einen fast verschwindend kleinen thermischen Ausdehnungskoeffizienten hat. Da die Lichtquelle 10 und die Detektorzeile 50 insgesamt eine Leistungsaufnahme im Bereich von wenigen Watt haben, können jedoch so große Temperaturerhöhungen auftreten, dass sich die in der Figur 2 gezeigten optischen Elemente und vor allem deren Fassungen und Halterungen thermisch ausdehnen.

Da die Lochblenden 18, 40 spiegelsymmetrisch zur Strahlteilerfläche 26 des Strahlteilerwürfels 20 auf dem Tragelement 52 angeordnet sind, verändert sich die relative Anordnung zwischen den Lochblenden 18, 40 und der Strahlteilerfläche 20 bei einer thermisch induzierten Längenausdehnung nicht. Bei einer solchen Ausdehnung liegt das Bild der ersten Lochblende 18 deswegen weiterhin exakt auf der optischen Achse der zweiten Lochblende 40 und ist lediglich entlang der optischen Achse etwas verschoben, was jedoch wegen der geringen numerischen Apertur des Messlichts ML und damit einhergehenden großen Tiefenschärfe unproblematisch ist.

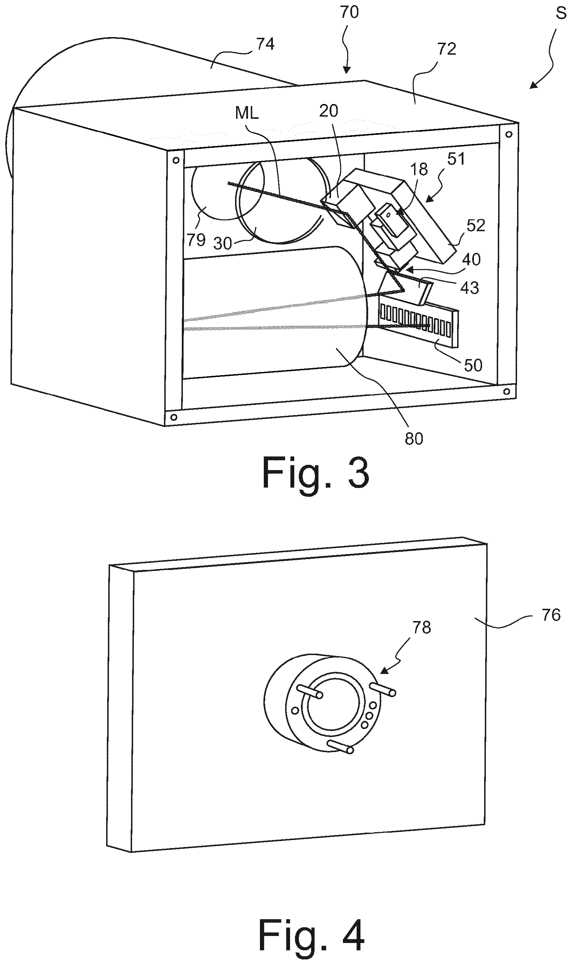

Die Figur 3 zeigt den erfindungsgemäßen Abstandssensor S in einer perspektivischen und stark vereinfachten Darstellung. Alle in den Figuren 1 und 2 gezeigten optischen Elemente sind in einem Gehäuse 70 aufgenommen, das ein in der Figur 3 erkennbares Hauptgehäuseteil 72, ein das Objektiv 38 aufnehmendes abnehmbares Gehäuseteil 74 und eine nur in der Figur 4 dargestellte Gehäuserückwand 76 umfasst. Letztere trägt eine automatische Wechselkupplung 78 zum Ankuppeln des Abstandssensors S an eine Halterung eines nicht dargestellten Koordinatenmessgeräts.

In dem ersten Gehäuseteil 72 sind das Lochblendenmodul 51, die erste Linse 30 der Abbildungsoptik 28, ein Gehäuse 80 der Spektrometeroptik 46, der Faltungsspiegel 43 und die Detektorzeile 50 erkennbar. An der Gehäusevorderseite ist ein Ausschnitt 79 erkennbar, durch den das Messlicht ML das Hauptgehäuseteil 72 verlässt, um in das austauschbare Objektiv 38 einzutreten. Weitere Teile wie eine Auswerteelektronik oder eine Spannungsversorgung sind aus Gründen der Übersichtlichkeit halber in der Figur 3 nicht dargestellt. Weggelassen wurden außerdem auch hier Fassungen und sonstige Halterungen für die optischen Elemente.

In der perspektivischen Darstellung der Figur 3 ist ein einzelner axialer Messlichtstrahl ML dargestellt. Man erkennt, dass der Faltungsspiegel 43 das Messlicht ML, nachdem dieses die zweite Lochblende 40 auf dem Lochblendenmodul 51 durchtreten hat, aus der Strahlebene heraus so ablenkt, dass es sich annähernd parallel zur Längsrichtung des Gehäuses 70 ausbreitet. Durch Zusammenwirken der Strahlteilerfläche 26 und des Faltungsspiegels 43 wird das vom Messobjekt 14 reflektierte Messlicht ML somit in drei Raumrichtungen gefaltet, was einen äußerst kompakten Aufbau ermöglicht. Der Abstandssensor S ist in der Figur 3 annähernd im Maßstab 1:1 wiedergegeben, so dass die dort gezeigten Abmessungen den tatsächlichen Abmessungen des Abstandssensors S annähernd entsprechen.

Die Figur 5 zeigt einen Ausschnitt des Strahlengangs für ein anderes Ausführungsbeispiel eines erfindungsgemäßen Abstandssensors S. Im Unterschied zu dem ersten Ausführungsbeispiel wird als Strahlteiler nicht ein Strahlteilerwürfel, sondern eine Strahlteilerplatte 90 verwendet. Die in der Figur 5 nach links weisende erste Planfläche der Strahlteilerplatte 90 bildet die Strahlteilerfläche 26, an der auftreffendes Messlicht ML teilweise reflektiert wird und bezüglich der die Lochblenden 18, 40 spiegelsymmetrisch angeordnet sind. Üblicherweise ist diese Planfläche mit einer dielektrischen Beschichtung versehen, mit der sich das Verhältnis zwischen transmittierten und reflektierten Licht festlegen lässt. Die in der Figur 5 nach rechts weisende zweite Planfläche 92 ist mit einer Antireflexbeschichtung versehen, damit Messlicht ML, das die erste Planfläche durchtreten kann, nicht an der zweiten Planfläche reflektiert wird.

Die Figur 6 zeigt eine perspektivische Darstellung eines Strahlteilerwürfels 20' gemäß einem nicht erfindungsgemäßen Ausführungsbeispiel. Der Strahlteilerwürfel 20' ist im Prinzip genauso aufgebaut wie der in der Figur 2 gezeigte Strahlteilerwürfel 20 und umfasst somit ebenfalls zwei miteinander verbundene Prismen 22, 24, zwischen denen die Strahlteilerfläche 26 verläuft. Im Unterschied zu dem ersten Ausführungsbeispiel werden die mit Blendenöffnungen 58 versehenen lichtabsorbierenden Beschichtungen 56, welche die Lochblenden 18, 40 bilden, jedoch nicht von separaten Platten, sondern direkt von Außenflächen des Strahlteilerwürfels 20' getragen. Auf diese Weise bilden die Prismen 22, 24 des Strahlteilerwürfels selbst einen Träger für die Lochblenden 18, 40, der einen isotropen thermischen Ausdehnungskoeffizienten hat.

## Patentansprüche

1. Chromatisch-konfokaler Abstandssensor, mit einem Gehäuse (70), in dem angeordnet sind:
- eine Lichtquelle (10), die dazu eingerichtet ist, polychromatisches Messlicht (ML) zu erzeugen,
- eine Abbildungsoptik (28), die eine chromatische Längsaberration hat,
- ein Spektrometer (44),
- eine plane Strahlteilerfläche (26), die Teil eines Strahlteilers (20; 90; 20') ist und im Lichtweg des Messlichts (ML) zwischen der Lichtquelle (10) und der Abbildungsoptik (28) und außerdem im Lichtweg des Messlichts, das nach Durchtritt durch die Abbildungsoptik (28) von einem Messobjekt (14) reflektiert wurde, zwischen der Abbildungsoptik und dem Spektrometer (44) angeordnet ist,
- eine erste Lochblende (18), die im Lichtweg zwischen der Lichtquelle (10) und der Strahlteilerfläche (20) angeordnet ist,
- eine zweite Lochblende (40), die im Lichtweg zwischen der Strahlteilerfläche (20) und dem Spektrometer (44) angeordnet ist,
- wobei die erste Lochblende (18) und die zweite Lochblende (40) spiegelsymmetrisch bezüglich der Strahlteilerfläche (26) angeordnet sind,
wobei sich das Messlicht (ML) innerhalb des Gehäuses (70) als Freistrahl ausbreitet, **dadurch gekennzeichnet, dass**
die Strahlteilerfläche (26), die erste Lochblende (18) und die zweite Lochblende (40) gemeinsam auf einem Träger (52; 22, 24) befestigt sind, der einen isotropen thermischen Ausdehnungskoeffizienten hat,
der Träger ein Tragelement (52) aufweist, auf dem der Strahlteiler (20; 90; 20'), die erste Lochblende (18) und die zweite Lochblende (40) befestigt sind, und dass
die erste Lochblende (18) und die zweite Lochblende (40) jeweils eine transparente Platte (54) aufweisen, die eine lichtabsorbierende Beschichtung (56) trägt, die eine Blendenöffnung (58) hat.

2. Abstandssensor nach Anspruch 1, **dadurch gekennzeichnet, dass** die Blendenöffnung (58) einen Durchmesser zwischen 10 µm und 50 µm hat.

3. Abstandssensor nach einem der Ansprüche 1 oder 2, **dadurch gekennzeichnet, dass** die Platten (18) an Stützelementen (60) befestigt sind, die ihrerseits an dem Tragelement (52) befestigt sind.

4. Abstandssensor nach Anspruch 3, **dadurch gekennzeichnet, dass** die Platten (54) der Lochblenden (14, 40), die Stützelemente (60) und das Tragelement (52) alle aus dem gleichen Material bestehen oder aus unterschiedlichen Materialien bestehen, die aber gleiche thermische Ausdehnungskoeffizienten haben.

5. Abstandssensor nach einem der vorhergehenden Ansprüche, **dadurch gekennzeichnet, dass** der Strahlteiler als Strahlteilerwürfel (20) ausgebildet ist.

6. Abstandssensor nach einem der vorhergehenden Ansprüche, **dadurch gekennzeichnet, dass** das Messlicht (ML) als divergentes Strahlenbündel auf die Strahlteilerfläche (26) auftrifft.

7. Abstandssensor nach einem der vorhergehenden Ansprüche, **dadurch gekennzeichnet, dass** die Abbildungsoptik (28) ein Objektiv (38) umfasst, das austauschbar an einem Teil des Gehäuses (72) befestigt ist, und dass das aus der Richtung der Lichtquelle (10) kommende Messlicht (ML) als kollimiertes Strahlenbündel in das Objektiv (28) eintritt.

8. Abstandssensor nach einem der vorhergehenden Ansprüche, **dadurch gekennzeichnet, dass** das Spektrometer (44) eine Detektorzeile (50), ein reflexives Beugungsgitter (48) und eine Spektrometeroptik (46) enthält, welche die zweite Lochblende (40) auf die Detektorzeile (50) abbildet, und dass die Spektrometeroptik (46) so im Lichtweg des Messlichts (ML) angeordnet ist, dass sie vor und nach Reflexion an dem Beugungsgitter (48) vom Messlicht (ML) durchtreten wird.

9. Abstandssensor nach einem der vorhergehenden Ansprüche, **dadurch gekennzeichnet, dass** das Gehäuse (70) eine automatische Wechselkupplung (76) aufweist, mit der das Gehäuse (70) automatisch an einer Halterung eines Koordinatenmessgeräts befestigbar ist.

10. Abstandssensor nach einem der vorhergehenden Ansprüche, **dadurch gekennzeichnet, dass** im Lichtweg zwischen der Lichtquelle (10) und der ersten Lochblende (18) eine Aperturblende (12) zum Abblenden von Störlicht angeordnet ist.

## Claims

1. Chromatic confocal distance sensor, having a housing (70) in which the following are arranged:
- a light source (10), which is configured in order to generate polychromatic measurement light (ML),
- imaging optics (28), which have a longitudinal chromatic aberration,
- a spectrometer (44),
- a planar beam splitter surface (26), which is part of a beam splitter (20; 90; 20') and is arranged in the light path of the measurement light (ML) between the light source (10) and the imaging optics (28) and furthermore in the light path of the measurement light, which has been reflected by a measurement object (14) after passing through the imaging optics (28), between the imaging optics and the spectrometer (44),
- a first diaphragm (18), which is arranged in the light path between the light source (10) and the beam splitter surface (20),
- a second diaphragm (40), which is arranged in the light path between the beam splitter surface (20) and the spectrometer (44),
- the first diaphragm (18) and the second diaphragm (40) being arranged mirror-symmetrically with respect to the beam splitter surface (26),
wherein the measurement light (ML) propagates as a free beam inside the housing (70), **characterized in that**
the beam splitter surface (26), the first diaphragm (18) and the second diaphragm (40) are fastened together on a carrier (52; 22, 24) which has an isotropic thermal expansion coefficient,
the carrier comprises a carrier element (52) on which the beam splitter (20; 90; 20'), the first diaphragm (18) and the second diaphragm (40) are fastened, and **in that**
the first diaphragm (18) and the second diaphragm (40) each comprise a plate (54), which carries a light-absorbing or reflecting coating (56) that has a diaphragm opening (58).

2. Distance sensor according to Claim 1, **characterized in that** the diaphragm opening (58) has a diameter of between 10 µm and 50 µm.

3. Distance sensor according to one of Claims 1 or 2, **characterized in that** the plates (18) are fastened on support elements (60), which are in turn fastened on the carrier element (52).

4. Distance sensor according to Claim 3, **characterized in that** the plates (54) of the diaphragms (14, 40), the support elements (60) and the carrier element (52) all consist of the same material, or consist of materials which are different but have the same thermal expansion coefficient.

5. Distance sensor according to one of the preceding claims, **characterized in that** the beam splitter is configured as a beam splitter cube (20).

6. Distance sensor according to one of the preceding claims, **characterized in that** the measurement light (ML) strikes the beam splitter surface (26) as a divergent ray bundle.

7. Distance sensor according to one of the preceding claims, **characterized in that** the imaging optics (28) comprise an objective (38), which is fastened replaceably on a part of the housing (72), and **in that** the measurement light (ML) coming from the direction of the light source (10) enters the objective (28) as a collimated ray bundle.

8. Distance sensor according to one of the preceding claims, **characterized in that** the spectrometer (44) contains a detector line (50), a reflective diffraction grating (48), and spectrometer optics (46) which image the second diaphragm (40) onto the detector line (50), and **in that** the spectrometer optics (46) are arranged in the light path of the measurement light (ML) in such a way that the measurement light (ML) passes through them before and after reflection at the diffraction grating (48).

9. Distance sensor according to one of the preceding claims, **characterized in that** the housing (70) comprises an automatic changeable coupling (76), with which the housing (70) can be fastened automatically on a holder of a coordinate measuring machine.

10. Distance sensor according to one of the preceding claims, **characterized in that** an aperture (12) for stopping out stray light is arranged in the light path between the light source (10) and the first diaphragm (18).

## Revendications

1. Capteur de distance confocal chromatique, comportant un boîtier (70) dans lequel sont disposés :
- une source de lumière (10) qui est réalisée pour générer une lumière de mesure polychromatique (ML),
- une optique de formation d'image (28) qui a une aberration chromatique longitudinale,
- un spectromètre (44),
- une surface de division de faisceau plane (26) qui fait partie d'un diviseur de faisceau (20 ; 90 ; 20') et est disposée dans le trajet lumineux de la lumière de mesure (ML) entre la source de lumière (10) et l'optique de formation d'image (28) et en outre dans le trajet lumineux de la lumière de mesure qui, après avoir traversé l'optique de formation d'image (28), a été réfléchie par un objet de mesure (14), entre l'optique de formation d'image et le spectromètre (44),
- un premier diaphragme à trou (18) qui est disposé dans le trajet lumineux entre la source de lumière (10) et la surface de division de faisceau (20),
- un deuxième diaphragme à trou (40) qui est disposé dans le trajet lumineux entre la surface de division de faisceau (20) et le spectromètre (44),
- le premier diaphragme à trou (18) et le deuxième diaphragme à trou (40) étant disposés symétriquement par rapport à la surface de division de faisceau (26),
dans lequel la lumière de mesure (ML) se propage dans le boîtier (70) sous la forme d'un faisceau libre,
**caractérisé en ce que**
la surface de division de faisceau (26), le premier diaphragme à trou (18) et le deuxième diaphragme à trou (40) sont fixés ensemble sur un support (52 ; 22, 24) qui possède un coefficient de dilatation thermique isotrope,
le support présente un élément porteur (52) sur lequel le diviseur de faisceau (20 ; 90 ; 20'), le premier diaphragme à trou (18) et le deuxième diaphragme à trou (40) sont fixés, et que
le premier diaphragme à trou (18) et le deuxième diaphragme à trou (40) présentent chacun une plaque transparente (54) qui porte un revêtement absorbant la lumière (56) ayant une ouverture de diaphragme (58).

2. Capteur de distance selon la revendication 1, **caractérisé en ce que** l'ouverture de diaphragme (58) présente un diamètre compris entre 10 µm et 50 µm.

3. Capteur de distance selon l'une des revendications 1 ou 2, **caractérisé en ce que** les plaques (18) sont fixées sur des éléments d'appui (60) qui sont eux-mêmes fixés sur l'élément porteur (52).

4. Capteur de distance selon la revendication 3, **caractérisé en ce que** les plaques (54) des diaphragmes à trou (14, 40), les éléments d'appui (60) et l'élément porteur (52) sont tous constitués du même matériau ou de matériaux différents mais qui possèdent des coefficients de dilatation thermique identiques.

5. Capteur de distance selon l'une des revendications précédentes, **caractérisé en ce que** le diviseur de faisceau est réalisé sous la forme d'un cube diviseur de faisceau (20).

6. Capteur de distance selon l'une des revendications précédentes, **caractérisé en ce que** la lumière de mesure (ML) atteint la surface de division de faisceau (26) sous la forme d'un faisceau de rayons divergent.

7. Capteur de distance selon l'une des revendications précédentes, **caractérisé en ce que** l'optique de formation d'image (28) comprend un objectif (38) qui est fixé de manière interchangeable sur une partie du boîtier (72), et que la lumière de mesure (ML) provenant de la direction de la source de lumière (10) pénètre dans l'objectif (28) sous la forme d'un faisceau de rayons collimaté.

8. Capteur de distance selon l'une des revendications précédentes, **caractérisé en ce que** le spectromètre (44) contient une ligne de détection (50), un réseau de diffraction à réflexion (48) et une optique de spectromètre (46) qui reproduit le deuxième diaphragme à trou (40) sur la ligne de détection (50), et que l'optique de spectromètre (46) est disposée dans le trajet lumineux de la lumière de mesure (ML) de manière à être traversée par la lumière de mesure (ML) avant et après réflexion sur le réseau de diffraction (48).

9. Capteur de distance selon l'une des revendications précédentes, **caractérisé en ce que** le boîtier (70) présente un accouplement de changement automatique (76) avec lequel le boîtier (70) peut être fixé automatiquement à un moyen de fixation d'un appareil de mesure de coordonnées.

10. Capteur de distance selon l'une des revendications précédentes, **caractérisé en ce qu'**un diaphragme d'ouverture (12) est disposé dans le trajet lumineux entre la source de lumière (10) et le premier diaphragme à trou (18) pour atténuer la lumière parasite.
